# FASCICULE DE BREVET EUROPEEN

(11) **EP 1 467 123 B1**
(45) Date de publication et mention de la délivrance du brevet: **17.02.2010**
(21) Numéro de dépôt: 04300195.7
(22) Date de dépôt: 08.04.2004
(51) Int. Cl.: F16H 3/087, F16H 3/091, F16H 3/093

(54) **Boîte de vitesses pour véhicule automobile**
Getriebe für ein Kraftfahrzeug
Gearbox for an automobile

(30) Priorité: 09.04.2003 FR 0304414
(43) Date de publication de la demande: 13.10.2004
(73) Titulaire: RENAULT S.A.S., 92100 Boulogne Billancourt (FR)
(72) Inventeur: Buannec, Michel, 78480 Verneuil sur Seine (FR); Picard, Marc, 92500 Rueil Malmaison (FR)

(56) Documents cités:
- DE-C- 19 912 315
- US-A- 4 640 393
- US-A- 5 259 260

## Description

La présente invention concerne une boîte de vitesses pour véhicule automobile, voir par exemple US-A-4640393, qui divulgue une boîte de vitesses selon le préambule de la revendication 1.

Les boîtes de vitesses manuelles conventionnelles comprennent un arbre principal d'entrée, un arbre secondaire de sortie parallèle à l'arbre principal, un ensemble de pignons fixes et un ensemble de pignons fous montés sur les arbres principal et secondaire pour l'entraînement de l'arbre secondaire par l'arbre principal avec différents rapports de transmission. L'arbre principal est lié à un arbre d'un moteur par l'intermédiaire d'un embrayage. La sélection d'un rapport de transmission se fait par solidarisation angulaire du pignon fou associé audit rapport de transmission avec l'arbre sur lequel il est monté, généralement à l'aide d'un dispositif de synchronisation.

Lors d'un changement de rapport de transmission, les vitesses de rotation relatives des arbres principal et secondaire sont modifiées et il est difficile de changer instantanément un rapport de transmission. De façon conventionnelle, un changement de rapport est effectué comme suit : ouverture de l'embrayage afin de désolidariser l'arbre principal du moteur, désaccouplement angulaire du pignon fou correspondant au rapport engagé, accouplement du pignon fou correspondant au nouveau rapport avec adaptation des vitesses de rotation relatives des arbres principal et secondaire, puis fermeture de l'embrayage.

On constate que lors d'une telle opération de changement de rapport de transmission, il se produit une rupture de transmission de couple du moteur vers les roues du véhicule, lors de l'ouverture de l'embrayage.

Pour effectuer des changements de rapport de transmission sans rupture de couple, on pourrait prévoir d'associer à chaque pignon fou un embrayage. Dans ce cas, un changement de rapport de transmission se ferait par désengagement d'un embrayage associé à un rapport précédemment engagé et engagement d'un autre embrayage associé au nouveau rapport, les engagement/désengagement étant progressifs pour permettre une adaptation des vitesses relatives des arbres principal et secondaire, et simultanés pour un changement de rapport sans rupture de couple.

Néanmoins, une telle solution conduirait à une boîte de vitesse comprenant un nombre important d'embrayages et d'actionneurs associés, augmentant la complexité et le coût de fabrication de la boîte de vitesses. Une telle solution ne serait pas non plus satisfaisante du point de vue de la compacité de la boîte de vitesse.

L'invention a pour objet une boîte de vitesses pour véhicule automobile à changement de rapport sous couple permettant de limiter un nombre d'éléments de transmission de couple tout en conservant les fonctionnalité de la boîte de vitesse.

L'invention a également pour objet une boîte de vitesse présentant un agencement permettant de préserver la compacité de la boîte de vitesses.

L'invention a encore pour objet une boîte de vitesses pouvant être robotisée avec un nombre limité d'actionneurs.

Une telle boîte de vitesses de véhicule automobile comprend un arbre principal d'entrée, un arbre secondaire de sortie parallèle à l'arbre principal, au moins un pignon fou et un pignon fixe de prise directe montés sur les arbres principal et secondaire, et un dispositif d'accouplement débrayable associé au pignon fou de prise directe.

La boîte de vitesses comprend une douille auxiliaire montée à rotation sur l'arbre principal et portant au moins deux dentures, au moins deux pignons de gamme montés fous sur l'arbre secondaire et engrènant avec les dentures de la douille auxiliaire, et un dispositif d'accouplement débrayable des pignons de gamme.

Selon l'invention, dans la boîte de vitesse ainsi prévue, la douille peut être entraînée en rotation à partir de l'arbre principal par l'intermédiaire d'ensembles d'éléments de transmission de couple, chaque ensemble d'éléments de transmission comprenant un dispositif d'accouplement débrayable, et chaque ensemble d'éléments de transmission correspondant à une rapport de transmission déterminé entre la douille et l'arbre principal.

Dès lors, lorsqu'un pignon de gamme déterminé est accouplé à l'arbre secondaire, la douille auxiliaire peut entraîner l'arbre secondaire avec un premier rapport de transmission, et la douille peut être entraînée par l'arbre principal par l'intermédiaire des ensembles d'éléments de transmission avec différents rapports de transmission. On obtient finalement entre l'arbre principal et l'arbre secondaire différents rapports de transmission, qui correspondent à une même « gamme », c'est-à-dire qu'ils sont obtenus avec un même rapport de transmission entre la douille et l'arbre secondaire. La sélection d'un autre pignon de gamme permet l'obtention d'une autre gamme de rapports. La douille forme un doubleur ou multiplicateur de gamme permettant l'obtention d'une pluralité de rapports de transmission avec un nombre limité d'ensemble d'éléments de transmission prévus pour attaquer la douille à partir de l'arbre principal.

Des changements de rapport entre des rapports d'une même gamme peuvent être effectués sans rupture de couple par désengagement progressif d'un dispositif d'accouplement débrayable associé à un ensemble d'éléments de transmission de couple entre l'arbre principal et la douille et engagement progressif d'un dispositif d'accouplement débrayable associé à un autre ensemble d'éléments de transmission disposé entre l'arbre principal et la douille.

On peut avantageusement prévoir un dispositif de d'accouplement débrayable commun à au moins deux pignon de gamme fous permet de conserver la compacité et la simplicité de la boîte de vitesse. Néanmoins, le changement de sélection d'un pignon de gamme en vue d'un changement d'un rapport d'une gamme vers un rapport d'une autre gamme, s'accompagne alors d'une rupture de transmission de couple entre la douille et l'arbre secondaire.

Cependant, les pignons de prise directe entre l'arbre principal et l'arbre secondaire permettent une transition d'une gamme de rapports vers une autre gamme de rapport en passant par un rapport intermédiaire défini par les pignons de prise directe, et en effectuant des changements de rapport sans rupture de couple entre l'arbre principal et l'arbre secondaire.

En effet, un changement de rapport d'un rapport d'une gamme vers un rapport de transmission obtenu par des pignons de prise directe peut être effectué sans rupture de couple par désengagement progressif du dispositif de d'accouplement débrayable de l'ensemble d'éléments de transmission associé audit rapport de gamme et embrayage progressif du dispositif d'accouplement débrayable de prise directe.

Dans un mode de réalisation, la boîte de vitesses comprend un dispositif d'accouplement débrayable disposé entre l'arbre principal et la douille auxiliaire pour l'accouplement direct de la douille auxiliaire avec l'arbre principal.

Dans un mode de réalisation, la boîte de vitesses comprend un arbre intermédiaire parallèle à l'arbre principal, des jeux de pignons intermédiaires fixes et fous montés sur les arbres principal et intermédiaire, et des dispositifs d'accouplement débrayable associés aux pignons intermédiaires fous, l'arbre auxiliaire portant un pignon de douille attaquant une denture de la douille auxiliaire. L'arbre intermédiaire lié en rotation à la douille et pouvant être entraîné par l'arbre principal avec différents rapports de transmission permet une transmission de couple de l'arbre principal vers la douille avec différents rapports de transmission.

Dans un mode de réalisation, l'arbre intermédiaire se présente sous la forme d'un fourreau intermédiaire muni de dentures et monté à rotation sur l'arbre secondaire.

On peut prévoir différents agencements des jeux de pignons intermédiaires. On peut prévoir que J'arbre principal porte un pignon intermédiaire et un dispositif d'accouplement débrayable associé, l'arbre intermédiaire portant un pignon fixe intermédiaire correspondant. On peut également prévoir que l'arbre intermédiaire porte un pignon intermédiaire fou et un dispositif d'accouplement débrayable associé, l'arbre principal portant un pignon fixe intermédiaire correspondant.

Dans un mode de réalisation, l'arbre principal porte un pignon fixe engageant simultanément avec un pignon fou de prise directe porté par l'arbre secondaire et un pignon intermédiaire monté fou sur l'arbre intermédiaire.

Dans un mode de réalisation, le pignon de douille est monté fou sur l'arbre intermédiaire avec possibilité d'accouplement à l'aide d'un dispositif d'accouplement débrayable, l'arbre intermédiaire portant un pignon de marche arrière monté fou avec possibilité d'accouplement à l'aide dudit dispositif d'accouplement débrayable, et ledit pignon de marche arrière engrènant directement avec une denture de l'arbre secondaire.

Dans un mode de réalisation, la boîte de vitesses comprend un arbre de marche arrière parallèle à l'arbre principal et portant un pignon fixe engrènant avec un pignon fou de l'abre principal et un pignon de marche arrière monté fou avec possibilité d'accouplement par l'intermédiaire d'un dispositif d'accouplement débrayable, ledit pignon de marche arrière engrènant avec une denture de l'arbre secondaire.

La présente invention et ses avantages seront mieux compris à l'étude de la description détaillée de modes de réalisation pris à titres d'exemples nullement limitatifs et illustrés par les dessins annexés sur lesquels :
- la figure 1 représente une boîte de vitesses selon un aspect de l'invention ;
- la figure 2 représente un tableau de vérité indiquant pour chaque vitesse obtenue à partir de la boîte de vitesses selon la figure 1 les dispositifs d'accouplement débrayables engagés ou désengagés ;
- la figure 3 est une variante de la boîte de vitesses selon la figure 1 ;
- la figure 4 est un tableau de vérité correspondant à la boîte de vitesses selon la figure 3 ;
- la figure 5 est une seconde variante de boîte de vitesses selon, la figure 1 ;
- la figure 6 est un tableau de vérité correspondant à la boîte de vitesses sur la figure 5 ;
- la figure 7 est une troisième variante de la boîte de vitesses selon la figure 1 ; et
- la figure 8 est un tableau de vérité correspondant à la boîte de vitesses selon la figure 7.

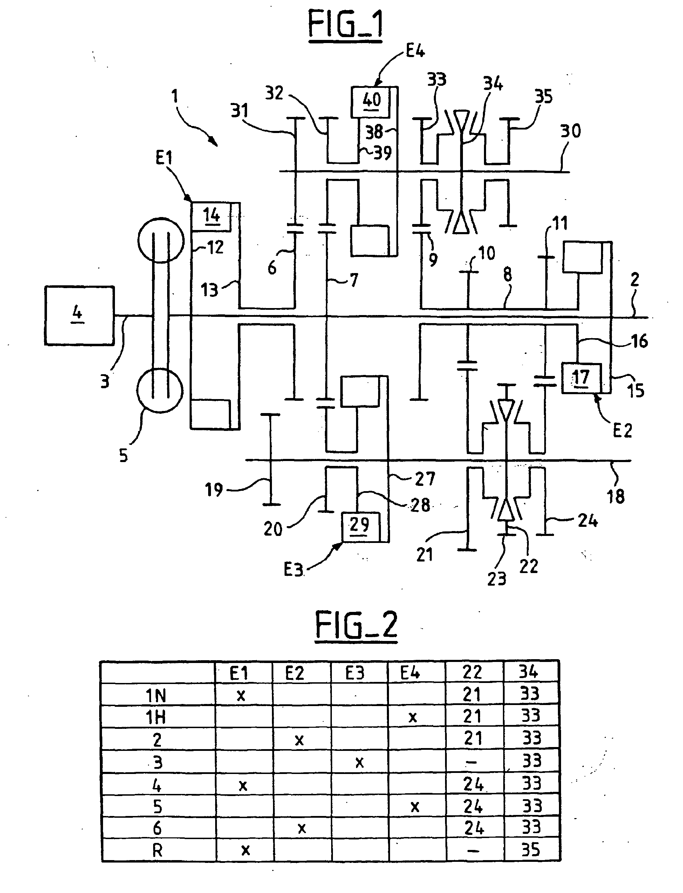

Sur la figure 1, une boîte de vitesse conforme à l'invention, référencée 1 dans son ensemble, comprend un arbre principal 2 lié en rotation à l'arbre de sortir 3 d'un moteur 4 par l'intermédiaire d'un amortisseur de torsion 5.

L'arbre principal 2 porte, du côté de l'amortisseur de torsion 5 vers son extrémité opposée, un premier pignon intermédiaire 6 monté fou, un second pignon intermédiaire 7 monté fixe et une douille auxiliaire 8 montée à rotation sur l'arbre principal 2.

La douille auxiliaire 8 présente des première, seconde et troisième dentures respectivement 9, 10 et 11 avec des diamètres nominaux différents.

Le premier pignon fou 6 est associé à un premier embrayage E1 disposé axialement entre le pignon fou 6 et l'amortisseur de torsion 5. Le premier embrayage E1 comprend un disque 12 pouvant être solidarisé en rotation avec un flasque 13 solidaire du premier pignon 6 par l'intermédiaire d'organes d'accouplement débrayables 14 non détaillées.

Un second embrayage E2 associé à la douille auxiliaire 8 permet la solidarisation angulaire de la douille auxiliaire 8 avec l'arbre principal 2. Le second embrayage E2 est disposé à l'extrémité de l'arbre principal 2 opposé au premier embrayage E1. Le second embrayage E2 comprend un disque 15 solidaire angulairement de l'arbre principal 2 et pouvant être couplé en rotation à un flasque 16 de la douille auxiliaire 8 par l'intermédiaire d'organes d'accouplement débrayables 17 non détaillés.

Un arbre secondaire 18 parallèle à l'axe principal 2 porte, du côté de l'amortisseur de torsion 5 vers son extrémité opposée, un pignon d'attaque 19 monté fixe, un pignon de prise directe 20 monté fou et engrènant avec le second pignon 7 fixe de l'arbre principal 2, un premier pignon de gamme 21 monté fou, un baladeur de gamme 22 solidaire en rotation de l'arbre secondaire 18 et muni d'une denture extérieure 23, et un second pignon de gamme 24 monté fou sur l'arbre secondaire 18.

Le second pignon 7 forme pignon fixe de prise directe. Le pignon d'attaque 19 est destiné à engrèner avec une couronne d'un différentiel ou d'un pont (non représenté) de transmission du couple aux roues.

Le baladeur de gamme 22, formant dispositif d'accouplement débrayable commun pour les pignons de gamme 21, 24, peut être déplacé axialement légèrement en direction du premier pignon de gamme 21 ou du second pignon de gamme 24 pour leur solidarisation angulaire sélective avec l'arbre secondaire 18. On pourra prévoir un accouplement par crabots, avec une synchronisation par contact entre des surfaces coniques. Les dispositifs d'accouplement débrayable par crabots présentent l'avantage d'être compacts.

Le premier pignon de gamme 21 engrène avec la seconde denture 10 de la douille auxiliaire 8, et le second pignon de gamme 24 engrène avec la troisième denture 11 de la douille auxiliaire 8.

Le pignon fou de prise directe 20 peut être solidarisé angulairement avec l'arbre secondaire 18 à l'aide d'un troisième embrayage E3 qui comprend un disque 27 solidaire en rotation de l'arbre secondaire 18 et pouvant être lié en rotation à un flasque 28 du pignon fou de prise directe 20 par l'intermédiaire d'organes d'accouplement débrayables 29.

Un arbre intermédiaire 30 parallèle à l'arbre principal 2 porte, de son extrémité située du côté de l'amortisseur de torsion 5 vers son extrémité opposée, un troisième pignon fixe intermédiaire 31 engrènant avec le premier pignon fou 6, un quatrième pignon fou intermédiaire 32 engrènant avec le second pignon fixe 7, un pignon fou de douille 33 engrènant avec la première denture 9 de la douille auxiliaire 8, un baladeur de marche arrière 34 solidaire en rotation de l'axe intermédiaire 30, et un pignon de marche arrière 35 monté fou et engrènant avec la denture 23 du baladeur sélecteur de gamme 22.

Le baladeur de marche arrière 34, formant dispositif d'accouplement débrayable, peut être déplacé axialement légèrement vers le pignon de douille 33 ou le pignon de marche arrière 35 pour leur solidarisation angulaire sélective avec l'arbre intermédiaire 30. On pourra prévoir un accouplement par crabots, avec une synchronisation par contact entre des surfaces coniques.

Le quatrième pignon fou 32 est associé à un quatrième embrayage E4 comprenant un disque 38 solidaire en rotation de l'axe intermédiaire 30 et pouvant être lié en rotation à un flasque 39 solidaire du quatrième pignon fou 32 par l'intermédiaire d'organes d'accouplement débrayables 40 non détaillés.

Tel que représenté sur la figure 1, l'arbre secondaire 18 est disposé d'un premier côté de l'arbre principal 2 et l'arbre intermédiaire 30 est disposé du côté opposé, dans un même plan. Le pignon de marche arrière 35 et le baladeur sélecteur de gamme 32 sont distants. Néanmoins, on comprendra que la boîte de vitesses 1 est en réalité agencée de façon tridimensionelle, de sorte que l'arbre principal 2, l'arbre secondaire 18 et l'arbre intermédiaire 30 ne sont pas situés tous les trois dans un même plan, ce qui permet un engrènement du pignon de marche arrière 35 avec le baladeur sélecteur de gamme 22.

Le fonctionnement de la boîte de vitesses 1 illustrée sur la figure 1 est décrit par la suite en référence à la figure 2, en conservant les références numériques utilisées pour la figure 1.

Un tableau de vérité à deux entrées comprend comme première entrée la vitesse engagée, et comme seconde entrée les différents dispositifs d'accouplement débrayable, c'est-à-dire le premier embrayage E1, le second embrayage E2, le troisième embrayage E3, le quatrième embrayage E4, le baladeur de gamme 22 et le baladeur de marche arrière 34.

Pour les embrayages E1, E2, E3, E4, une croix indique si l'embrayage est fermé, et pour les baladeurs 22, 34, il est reporté dans la case correspondante la référence numérique du pignon associé qui est sélectionné, ou un trait si le baladeur 22, 34 est dans une position neutre.

La boîte de vitesses 1 selon la figure 1 permet d'obtenir une boîte à sept rapports de marche avant 1N, 1H et 2 à 6, plus un rapport de marche arrière « R ». Les rapports sont étagés de façon à obtenir une première normale « 1N » pour un fonctionnement habituel du véhicule et une première d'hiver « 1H » plus longue adaptée pour éviter un patinage des roues lors de démarrage sur sol glissant.

Pour les vitesses de marche avant, le baladeur de marche arrière 34 est en position de sélection du pignon de douille 33.

La première normale, la première d'hiver et la seconde forment une première gamme de vitesses. Pour ces vitesses, le baladeur de gamme 22 est en position de sélection du premier pignon de gamme 21.

Pour l'obtention de la première normale « 1N », l'embrayage E1 est fermé, et les autres embrayages sont ouverts. Le couple est transmis de l'arbre principal 2 vers la douille 8 par l'intermédiaire du premier pignon 6 engrènant avec le troisième pignon 31, de l'arbre intermédiaire 30, du pignon de douille 33. Le premier embrayage E1, le premier pignon 6, le troisième pignon 31, l'arbre 30 et le pignon de douille 33 forment un premier ensemble d'éléments de transmission entre l'arbre principal 2 et la douille 8.

Pour le passage de la première vitesse hiver « 1H », le quatrième embrayage E4 est fermé et les autres embrayages restent ouverts. Le couple est transmis de l'arbre principal 2 vers la douille 8 par l'intermédiaire du second pignon 7, du quatrième pignon 32, du quatrième embrayage E4, de l'arbre 30 et du pignon de douille 33. Le second pignon 7, le quatrième pignon 32, le quatrième embrayage E4 et le pignon de douille 33 forment un second ensemble d'éléments de transmission de couple entre l'arbre principal 2 et la douille 8.

Pour le passage de la seconde vitesse, le second embrayage E2 est fermé et les autres embrayages restent ouverts. Le couple est transmis de l'arbre principal 2 à la douille 8 directement par le second embrayage E2. L'embrayage E2 forme un ensemble d'éléments de transmission de couple entre l'arbre principal 2 et la douille 8.

La quatrième vitesse, la cinquième vitesse et la sixième vitesse forment une seconde gamme de rapports de transmission. Pour le passage de ces vitesses, le baladeur de gamme 22 est déplacé axialement pour la sélection du second pignon de gamme 24. De la même façon que pour les vitesses de la première gamme, les quatrième, cinquième et sixième vitesses sont obtenues respectivement en fermant le premier embrayage E1, le quatrième embrayage E4, et le deuxième embrayage E2.

La troisième vitesse est obtenue en fermant l'embrayage E3 et en laissant les autres embrayages ouverts. Le baladeur de gamme 22 peut être placé en position neutre dans laquelle ni le premier pignon de gamme 21 ni le second pignon de gamme 24 n'est solidarisé avec l'arbre secondaire 18. Le couple est transmis de l'arbre principal 2 à l'arbre secondaire 18 directement par le second pignon 7, le pignon fou de prise directe 20 et le troisième embrayage E3. Le second pignon 7 et le pignon fou de prise directe 20 forment un jeu de pignons de prise directe entre l'arbre principal 2 et l'arbre secondaire 18.

Lorsqu'une gamme est sélectionnée, le passage d'un rapport de la gamme à un autre rapport de la gamme peut se faire sans rupture de couple par désengagement, parmi les premier, second et quatrième embrayage E1, E2, E4, de l'embrayage engagé, et actionnement progressif et simultané d'un autre embrayage, toujours parmi les premier second et quatrième embrayage E1, E2, E4. On prévoit des dispositifs d'embrayage permettant des engagements/désengagements progressifs, par exemple des dispositifs d'embrayage hydraulique ou par friction.

Les pignons de prise directe 7, 20 et le troisième embrayage E3 permettent en outre d'éviter une rupture de couple lors d'un changement de gamme. L'étagement de la boîte de vitesses est adapté pour que le rapport de transmission défini par les pignons de prise directe 7, 20 corresponde à un rapport intermédiaire de la boîte de vitesses située entre deux gammes de rapports.

Ainsi, pour le passage de seconde en troisième sans rupture de couple, le second embrayage E2 est désengagé progressivement pendant que le troisième embrayage E3 est engagé progressivement. De même, pour le passage de troisième en quatrième, le troisième embrayage E3 est désengagé progressivement, le quatrième embrayage E4 étant engagé progressivement et simultanément.

Pour la sélection de la marche arrière « R », le baladeur de marche arrière 34 est déplacé axialement en direction du pignon de marche arrière 35, et le premier embrayage E1 est actionné pour être engagé. Le couple est transmis de l'arbre principal 2 vers l'arbre secondaire 18 par le premier embrayage E1, le premier pignon fou 6, le troisième pignon 31, l'arbre intermédiaire 30, le pignon de marche arrière 35, et le baladeur de sélection de gamme 22.

Les embrayages E1, E2, E3 et E4, ainsi que les baladeurs 22 et 34 sont de préférence commandés de façon connue en soi par des actionneurs (non représentés), tels que des actionneurs pneumatiques, hydrauliques ou électriques.

On constate que la boîte de vitesse permet l'obtention de sept rapports de marche avant et un rapport de marche arrière avec seulement quatre embrayage E1, E2, E3, E4 et deux dispositifs d'accouplement du type à baladeurs 22, 34. Un nombre limité d'actionneurs pourra être prévu. La boîte de vitesse est donc simple et compacte.

De plus, la prévision de dispositifs d'accouplement débrayables par crabots, généralement plus compacts que des embrayages permet d'obtenir une boîte de vitesses compacte. Ces dispositifs d'accouplement débrayable ne permettent pas un engagement aussi progressif que des embrayages. Néanmoins, les fonctionnalités de la boîte de vitesse sont conservées et les rapports de la boîte de vitesses peuvent être montés et descendus sans rupture de couple.

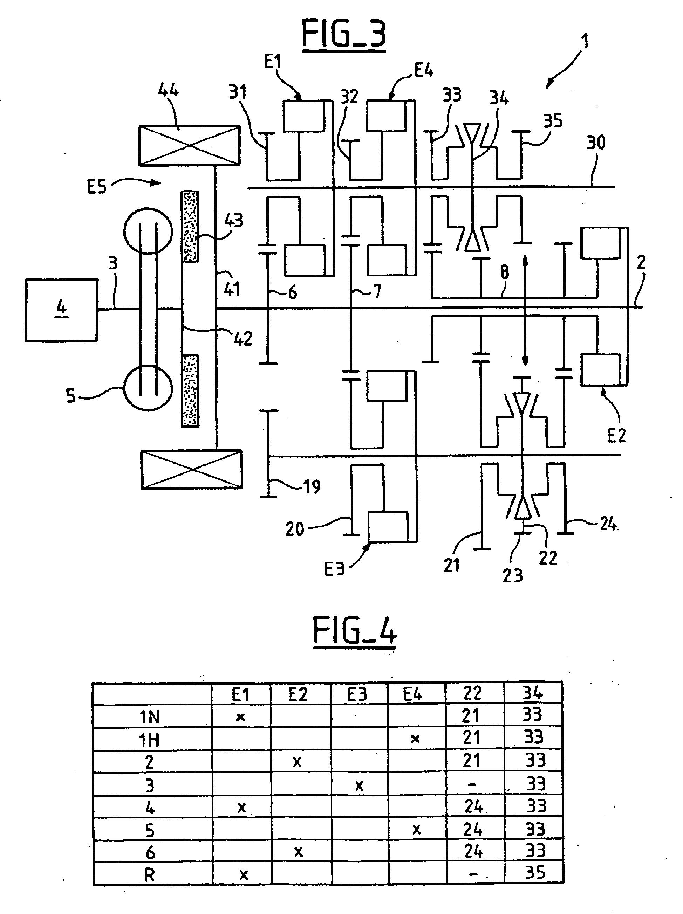

Sur la figure 3, où les références aux éléments semblables à ceux de la figure 1 ont été reprises, la boîte de vitesses 1 diffère du mode de réalisation de la figure 1 en ce que le premier pignon 6 est monté fixe sur l'arbre principal 2, le troisième pignon 31 étant monté fou sur l'arbre intermédiaire 30, et associé à un premier embrayage E1 disposé axialement entre le troisième pignon 31 et le quatrième pignon 32.

Un cinquième embrayage principal E5 est disposé entre l'amortisseur de torsion 5 et l'arbre principal 2, l'embrayage E5 comprenant une cloche 41 solidaire en rotation de l'arbre principal 2, et un disque 42 muni de garnitures 43 et pouvant être déplacés en direction de la cloche 41 pour leur solidarisation angulaire à l'aide d'organes de commande non présentés.

Un moteur électrique 44 comprend un stator (non représenté) solidaire de la structure du véhicule (non représentée) et un rotor (non représenté) solidaire de la cloche 44. Le cinquième embrayage E5 permet de coupler en rotation l'arbre de sortie 3 du moteur 4 avec l'arbre principal 2. Le moteur électrique 44 peut exercer un couple d'entraînement ou de freinage directement sur l'arbre principal 2.

Avec cet agencement, on peut soit entraîner l'arbre principal 2 à l'aide du moteur électrique 44, le cinquième embrayage E5 étant ouvert, soit entraîner l'arbre principal 2 à l'aide du moteur 4 et du moteur 44 lorsque l'embrayage E5 est couplé, ou seulement à l'aide du moteur 44.

Comme indiqué dans le tableau de vérité de la figure 4, les vitesses sont obtenues de la même façon que pour le mode de réalisation correspondant à la figure 1

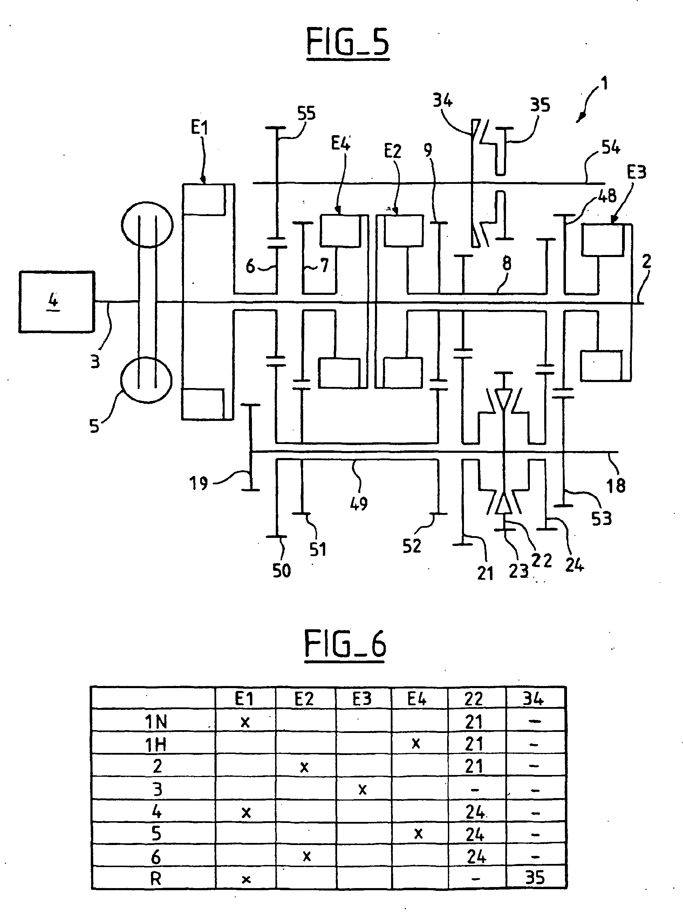

Sur la figure 5, où les références aux éléments semblables à ceux de la figure 1 ont été reprises, la boîte de vitesses 1 diffère du mode de réalisation de la figure 1 en ce que le second pignon 7 est monté fous sur l'arbre principal 2 en étant associé à un quatrième embrayage E4.

Le second embrayage E2 associé à la douille 8 est situé axialement entre le quatrième embrayage E4 et la douille auxiliaire 8. Un pignon de prise directe 48 est monté fou sur l'arbre principal 2 en étant associé à un troisième embrayage E3 situé axialement du côté du pignon fou de prise directe 48 opposé à la douille auxiliaire 8.

L'arbre intermédiaire se présente sous la forme d'un fourreau intermédiaire 49 disposé à rotation sur l'arbre secondaire 18 en étant situé axialement entre le pignon d'attaque 19 et le premier pignon de gamme 21. Le fourreau intermédiaire 49 présente une première denture 50 engrènant avec le premier pignon 6, une seconde denture 51 engrènant avec le second pignon 7, et une troisième denture de douille 52 engrènant avec la première denture 9 de la douille auxiliaire 8.

L'arbre secondaire 18 porte un pignon fixe de prise directe 53 situé du côté axialement du second pignon de gamme 24 opposé au fourreau intermédiaire 49.

Un arbre de marche arrière 54 parallèle à l'arbre principal 2 porte un pignon de transmission 55 fixe engrènant avec le premier pignon 6, et un pignon de marche arrière 35 associé à un sélecteur 34, le pignon de marche arrière 35 engrènant avec la denture 23 du baladeur de gamme 22.

Le fonctionnement de cette boîte de vitesses est similaire à celui de la boîte de vitesses illustrée par la figure 1. Toutefois, le fourreau intermédiaire 49 est en permanence lié en rotation avec la douille 8 par engagement de leurs dentures respectives 52, 9.

Un premier ensemble d'éléments de transmission pour le passage du couple de l'arbre principal 2 vers la douille auxiliaire 8 est constitué par l'embrayage 1, la première denture 50 du fourreau 49, et la troisième denture 52 du fourreau intermédiaire 49.

Un second ensemble d'éléments de transmission est constitué par le quatrième embrayage 4, le second pignon 7, la seconde denture 51 du fourreau intermédiaire 49 et la troisième denture 52 du fourreau intermédiaire 49.

Un troisième ensemble d'éléments de transmission est constitué du second embrayage E2.

Dans ce mode de réalisation, et comme on peut le voir sur le tableau de vérité correspondant de la figure 6, l'embrayage E2 est associé aux second et sixième rapports et l'embrayage E4 est associé au premier rapport d'hiver et au cinquième rapport.

Ce mode de réalisation comprenant un fourreau auxiliaire monté à rotation sur l'arbre secondaire permet d'obtenir une boîte de vitesses compacte.

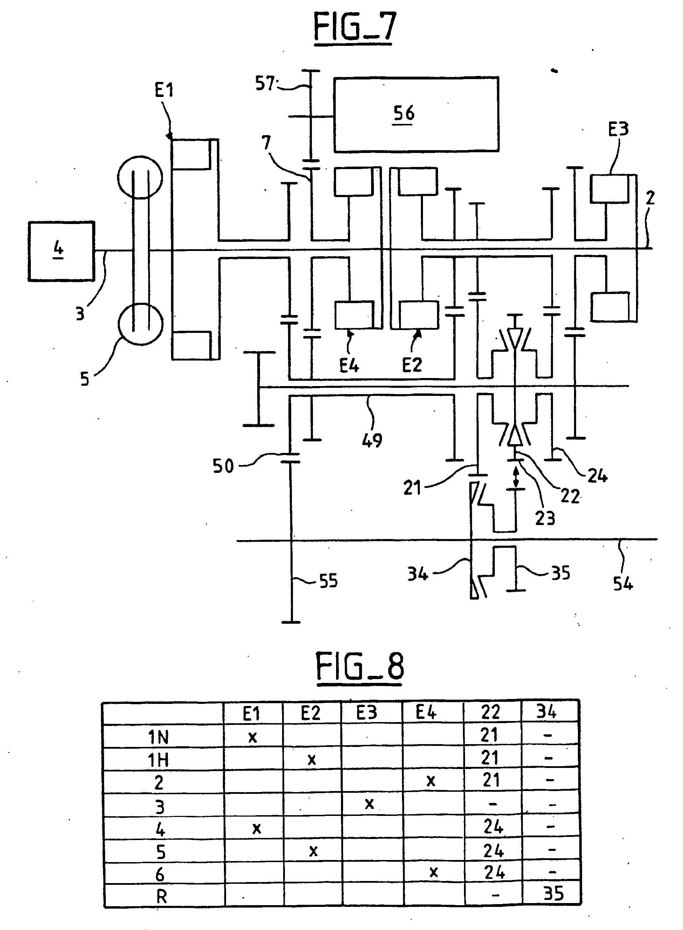

Le mode de réalisation de la figure 7 diffère du mode de réalisation de la figure 5 en ce que le pignon de transmission 55 monté sur l'arbre arrière 54 engrène avec la première denture 50 du fourreau intermédiaire 49, et qu'un moteur électrique 56 vient engrèner par l'intermédiaire d'une denture 57 directement sur le second pignon 7 monté fou sur l'arbre principal 2.

En se référant au tableau correspondant de la figure 8 : le premier embrayage E1 est associé à la première normale et à la quatrième vitesse, l'embrayage E2 est associé à la première hiver et à la cinquième vitesse, et l'embrayage E4 est associé à la seconde vitesse et la sixième vitesse, l'embrayage E3 étant associé à la troisième vitesse.

Les diamètres respectifs des différents pignons ou dentures sont choisis de façon à obtenir un tel étagement, tout en conservant un rapport intermédiaire obtenu par les pignons de prise directe entre l'arbre principal 2 et l'arbre principal secondaire 18.

Dans ce mode de réalisation, le moteur électrique 56 peut apporter une puissance supplémentaire en mode de démarrage hiver. En effet, le moteur électrique possède un couple de sortie qui ne dépend pas de sa vitesse de rotation et peut permettre le démarrage d'un véhicule automobile avec un rapport plus long. Le moteur électrique pourra également être utilisé en cas d'enclenchement du cinquième rapport pour récupérer de l'énergie électrique.

Grâce à l'invention, on obtient une boîte de vitesses permettant de fournir un nombre élevé de vitesses, ce qui permet d'augmenter l'agrément d'utilisation, tout en étant adaptée pour des changements de rapport de boîte de vitesses sans rupture de couple. La boîte de vitesses reste néanmoins compacte et nécessite l'utilisation d'embrayages en nombre limité.

La douille auxiliaire pouvant être attaquée à partir de l'arbre principal avec différents rapports de transmission, et pouvant attaquer elle-même l'arbre secondaire avec différents rapports de transmission, ici au nombre de deux, forme un doubleur de gamme. La sélection d'une gamme peut être effectué à l'aide d'un dispositif d'accouplement débrayable du type à crabots qui est compact mais ne permet pas une synchronisation suffisamment progressive. Néanmoins, la prévision d'au moins un jeu de pignons de prise directe et du troisième embrayage associé permet la réalisation d'un rapport intermédiaire entre deux gammes de rapports pour des montés et descente de rapport sous couple.

## Revendications

1. Boîte de vitesses de véhicule automobile comprenant un arbre principal (2) d'entrée, un arbre secondaire (18) de sortie parallèle à l'arbre principal, au moins un pignon fou (20) et un pignon fixe (7)de prise directe montés sur les arbres principal (2) et secondaire (18), un dispositif d'accouplement débrayable (E3) associé au pignon fou (20) de prise directe, une douille auxiliaire (8) montée à rotation sur l'arbre principal (2) et portant au moins deux dentures (10, 11), au moins deux pignons de gamme (21, 24) montés fous sur l'arbre secondaire et engrènant avec les dentures (10, 11) de la douille auxiliaire (8), et au moins un dispositif d'accouplement débrayable (22) associé aux pignons de gamme (21, 24), **caractérisé par le fait que** la douille auxiliaire (8) peut être entraînée en rotation à partir de l'arbre principal (2) par l'intermédiaire d'ensembles d'éléments de transmission de couple (E1/6/31 ; 7/32/E4), chaque ensemble d'éléments de transmission comprenant un dispositif d'accouplement débrayable (E1, E4) et chaque ensemble d'éléments de transmission (E1/6/31 ; 7/32/E4) correspondant à un rapport de transmission déterminé entre la douille auxiliaire (8) et l'arbre principal (2).

2. Boîte de vitesses selon la revendication 1, **caractérisé par le fait qu'**elle comprend un dispositif d'accouplement débrayable (22) commun aux différents pignons de gamme (21, 24).

3. Boîte de vitesses selon l'une quelconque des revendications 1 ou 2, **caractérisé par le fait qu'**elle comprend un dispositif d'accouplement débrayable (E2) entre l'arbre principal (2) et la douille auxiliaire (8).

4. Boîte de vitesses selon l'une quelconque des revendications précédentes, **caractérisé par le fait qu'**elle comprend un arbre intermédiaire (30) parallèle à l'arbre principal (2), des jeux de pignons intermédiaires fixes et fous (6-31 ; 7-32) montés sur les arbres principal et intermédiaire, des dispositifs d'accouplement débrayables associés au pignons intermédiaires fous (E1, E4), l'arbre auxiliaire (30) portant un pignon de douille (33) attaquant une denture (9) de la douille auxiliaire (8).

5. Boîte de vitesses selon la revendication 4, **caractérisé par le fait que** l'arbre intermédiaire se présente sous la forme d'un fourreau (49) intermédiaire muni de dentures (50, 51, 52) et monté à rotation sur l'arbre secondaire (18).

6. Boîte de vitesses selon l'une quelconque des revendications 4 ou 5, **caractérisé par le fait que** l'arbre principal (2) porte un pignon intermédiaire fou (6) et un dispositif d'accouplement débrayable (E1) associé, l'arbre intermédiaire (30) portant un pignon fixe (31) intermédiaire correspondant.

7. Boîte de vitesse selon l'une quelconque des revendications 4 à 6, **caractérisé par le fait que** l'arbre intermédiaire (30) porte un pignon intermédiaire fou (32) et un dispositif d'accouplement débrayable (E4) associé, l'arbre principal (2) portant un pignon fixe intermédiaire (7) correspondant.

8. Boîte de vitesses selon l'une quelconque des revendications 4 à 7, **caractérisé par le fait que** l'arbre principal (2) porte un pignon fixe (7) engageant simultanément avec un pignon fou de prise directe (20) porté par l'arbre secondaire (18) et un pignon intermédiaire (32) monté fou sur l'arbre intermédiaire (30).

9. Boîte de vitesses selon l'une quelconque des revendications 4 à 8, **caractérisé par le fait que** le pignon de douille (33) est monté fou sur l'arbre intermédiaire (30) avec possibilité d'accouplement à l'aide d'un dispositif d'accouplement débrayable (34), l'arbre intermédiaire (30) portant un pignon de marche arrière (35) monté fou avec possibilité d'accouplement à l'aide dudit dispositif d'accouplement débrayable (34), et ledit pignon de marche arrière engrènant directement avec une denture (23) de l'arbre secondaire (18).

10. Boîte de vitesses selon l'une quelconque des revendications 4 à 8, **caractérisé par le fait qu'**elle comprend un arbre de marche arrière (54) parallèle à l'arbre principal et portant un pignon fixe (55) engrènant avec un pignon intermédiaire fou (6) de l'arbre principal et un pignon de marche arrière (35) monté fou avec possibilité d'accouplement par l'intermédiaire d'un dispositif d'accouplement débrayable (34), ledit pignon fou de marche arrière engrènant avec une denture (23) de l'arbre secondaire.

## Claims

1. Motor vehicle gearbox comprising a main input shaft (2), a secondary output shaft (18) parallel to the main shaft, at least one idling gear (20) and a fixed gear (7) for direct drive which are mounted on the main (2) and secondary (18) shafts, a disengageable coupling device (E3) associated with the direct drive idling gear (20), an auxiliary sleeve (8) rotatably mounted on the main shaft (2) and bearing at least two toothings (10, 11), at least two range gears (21, 24) mounted idly on the secondary shaft and meshing with the toothings (10, 11) of the auxiliary sleeve (8), and at least one disengageable coupling device (22) associated with the range gears (21, 24), **characterized in that** the auxiliary sleeve (8) can be rotated from the main shaft (2) via sets of torque transmission elements (E1/6/31; 7/32/E4), each set of transmission elements comprising a disengageable coupling device (E1, E4) and each set of transmission elements (E1/6/31; 7/32/E4) corresponding to a predetermined transmission ratio between the auxiliary sleeve (8) and the main shaft (2).

2. Gearbox according to Claim 1, **characterized in that** it comprises a disengageable coupling device (22) common to the different range gears (21, 24).

3. Gearbox according to either one of Claims 1 and 2, **characterized in that** it comprises a disengageable coupling device (E2) between the main shaft (2) and the auxiliary sleeve (8).

4. Gearbox according to any one of the preceding claims, **characterized in that** it comprises an intermediate shaft (30) parallel to the main shaft (2), sets of intermediate fixed and idling gears (6-31; 7-32) mounted on the main and intermediate shafts, and disengageable coupling devices associated with the intermediate idling gears (E1, E4), the auxiliary shaft (30) bearing a sleeve gear (33) engaging with a toothing (9) of the auxiliary sleeve (8).

5. Gearbox according to Claim 4, **characterized in that** the intermediate shaft takes the form of an intermediate tube (49) provided with toothings (50, 51, 52) and rotatably mounted on the secondary shaft (18).

6. Gearbox according to either one of Claims 4 and 5, **characterized in that** the main shaft (2) bears an intermediate idling gear (6) and an associated disengageable coupling device (E1), the intermediate shaft (30) bearing a corresponding intermediate fixed gear (31).

7. Gearbox according to any one of Claims 4 to 6, **characterized in that** the intermediate shaft (30) bears an intermediate idling gear (32) and an associated disengageable coupling device (E4), the main shaft (2) bearing a corresponding intermediate fixed gear (7).

8. Gearbox according to any one of Claims 4 to 7, **characterized in that** the main shaft (2) bears a fixed gear (7) engaging simultaneously with a direct drive idling gear (20) borne by the secondary shaft (18) and an intermediate gear (32) mounted idly on the intermediate shaft (30).

9. Gearbox according to any one of Claims 4 to 8, **characterized in that** the sleeve gear (33) is mounted idly on the intermediate shaft (30) with the possibility of coupling with the aid of a disengageable coupling device (34), the intermediate shaft (30) bearing a reverse gear (35) mounted idly with the possibility of coupling with the aid of the said disengageable coupling device (34), and the said reverse gear meshing directly with a toothing (23) of the secondary shaft (18).

10. Gearbox according to any one of Claims 4 to 8, **characterized in that** it comprises a reverse shaft (54) parallel to the main shaft and bearing a fixed gear (55) meshing with an intermediate idling gear (6) of the main shaft and a reverse gear (35) mounted idly with the possibility of coupling via a disengageable coupling device (34), the said reverse idling gear meshing with a toothing (23) of the secondary shaft.

## Patentansprüche

1. Getriebe für ein Kraftfahrzeug mit einer Haupteingangswelle (2), einer Nebenausgangswelle (18), die parallel zur Hauptwelle verläuft, mindestens einem Direktgang-Losrad (20) und -Festrad (7), die auf der Hauptwelle (2) und Nebenwelle (18) angebracht sind, einer dem Direktgang-Losrad (20) zugeordneten ausrückbaren Kupplungsvorrichtung (E3), einer drehbar auf der Hauptwelle (2) angebrachten Hilfsbuchse (8), die mindestens zwei Verzahnungen (10, 11) aufweist, mindestens zwei Bereichsrädern (21, 24), die lose auf der Nebenwelle angebracht sind und mit den Verzahnungen (10, 11) der Hilfsbuchse (8) in Eingriff stehen, und mindestens einer ausrückbaren Kupplungsvorrichtung (22), die den Bereichsrädern (21, 24) zugeordnet ist, **dadurch gekennzeichnet, dass** die Hilfsbuchse (8) von der Hauptwelle (2) über Anordnungen von Drehmomentübertragungselementen (E1/6/31; 7/32/E4) drehangetrieben werden kann, wobei jede Anordnung von Übertragungselementen eine ausrückbare Kupplungsvorrichtung (E1, E4) aufweist und jede Anordnung von Übertragungselementen (E1/6/31; 7/32/E4) einem bestimmten Übersetzungsverhältnis zwischen der Hilfsbuchse (8) und der Hauptwelle (2) entspricht.

2. Getriebe nach Anspruch 1, **dadurch gekennzeichnet, dass** es eine ausrückbare Kupplungsvorrichtung (22) umfasst, die verschiedenen Bereichsrädern (21, 24) gemein ist.

3. Getriebe nach Anspruch 1 oder 2, **dadurch gekennzeichnet, dass** es eine ausrückbare Kupplungsvorrichtung (E2) zwischen der Hauptwelle (2) und der Hilfsbuchse (8) umfasst.

4. Getriebe nach einem der vorhergehenden Ansprüche, **dadurch gekennzeichnet, dass** es eine Zwischenwelle (30), die parallel zur Hauptwelle (2) verläuft, Sätze von Fest- und Loszwischenrädern (6-31; 7-32), die auf der Haupt- und Zwischenwelle angebracht sind, und ausrückbare Kupplungsvorrichtungen, die den Loszwischenrädern (E1, E4) zugeordnet sind, umfasst, wobei die Hilfswelle (30) ein Buchsenrad (33) aufweist, das an eine Verzahnung (9) der Hilfsbuchse (8) angreift.

5. Getriebe nach Anspruch 4, **dadurch gekennzeichnet, dass** die Zwischenwelle in Form einer Zwischenhülse (49) vorliegt, die mit Verzahnungen (50, 51, 52) versehen und drehbar auf der Nebenwelle (18) angebracht ist.

6. Getriebe nach Anspruch 4 oder 5, **dadurch gekennzeichnet, dass** die Hauptwelle (2) ein Loszwischenrad (6) und eine zugeordnete ausrückbare Kupplungsvorrichtung (E1) trägt, wobei die Zwischenwelle (30) ein entsprechendes Zwischenfestrad (31) trägt.

7. Getriebe nach einem der Ansprüche 4 bis 6, **dadurch gekennzeichnet, dass** die Zwischenwelle (30) ein Loszwischenrad (32) und eine zugeordnete ausrückbare Kupplungsvorrichtung (E4) trägt, wobei die Hauptwelle (2) ein entsprechendes Zwischenfestrad (7) trägt.

8. Getriebe nach einem der Ansprüche 4 bis 7, **dadurch gekennzeichnet, dass** die Hauptwelle (2) ein Festrad (7) trägt, das gleichzeitig mit einem Direktgang-Losrad (20), das von der Nebenwelle (18) getragen wird, und einem Zwischenrad (32), das lose auf der Zwischenwelle (30) angebracht ist, in Eingriff steht.

9. Getriebe nach einem der Ansprüche 4 bis 8, **dadurch gekennzeichnet, dass** das Buchsenrad (33) lose auf der Zwischenwelle (30) angebracht ist, wobei es mit Hilfe einer ausrückbaren Kupplungsvorrichtung (34) gekuppelt werden kann, wobei die Zwischenwelle (30) ein Rückwärtsgangrad (35) trägt, das lose angebracht ist und mit Hilfe der ausrückbaren Kupplungsvorrichtung (34) gekuppelt werden kann, wobei das Rückwärtsgangrad direkt mit einer Verzahnung (23) der Nebenwelle (18) in Eingriff steht.

10. Getriebe nach einem der Ansprüche 4 bis 8, **dadurch gekennzeichnet, dass** es eine Rückwärtsgangwelle (54) umfasst, die parallel zur Hauptwelle verläuft und ein Festrad (55), das mit einem Loszwischenrad (6) der Hauptwelle in Eingriff steht, und ein Rückwärtsgangrad (35), das lose angebracht ist und mittels einer ausrückbaren Kupplungsvorrichtung (34) gekuppelt werden kann, trägt, wobei das Rückwärtsganglosrad mit einer Verzahnung (23) der Nebenwelle in Eingriff steht.
